# EUROPÄISCHE PATENTSCHRIFT

(11) **EP 0 690 260 B1**
(45) Veröffentlichungstag und Bekanntmachung des Hinweises auf die Patenterteilung: **07.10.1998**
(21) Anmeldenummer: 95810406.9
(22) Anmeldetag: 19.06.1995
(51) Int. Cl.: F16M 5/00, F01D 25/28

(54) **Verfahren zum Austausch eines Maschinenteils**
Method of replacement of a machine part
Procédé de remplacement d'un élément de machine

(30) Priorität: 02.07.1994 DE 4423324
(43) Veröffentlichungstag der Anmeldung: 03.01.1996
(73) Patentinhaber: ASEA BROWN BOVERI AG, 5400 Baden (CH)
(72) Erfinder: Stadelmann, Peter W., CH-8800 Thalwil (CH)

(56) Entgegenhaltungen:
- EP-A- 0 246 470
- DE-C- 852 758
- FR-A- 1 474 474

## Beschreibung

### Technisches Gebiet

Die Erfindung betrifft ein Verfahren zum Austausch eines Maschinenteils einer Maschinenanlage, deren massgebliche, miteinandergekuppelte Maschinenteile auf einer gemeinsamen Tischplatte angeordnet sind, welche über Einzelstützen im Boden entweder unmittelbar oder über eine Sohlplatte verankert ist, und welche zur Aufnahme der Maschinenteile Aussparungen besitzt.

### Stand der Technik

Als derartige Maschinenanlage gilt insbesondere die mehrgehäusige Turbogruppe einer Dampfkraftanlage, wobei die Maschinenteile in Form der einzelnen Turbinenteile und des Generators gegeben sind. Solch eine Anlage und ein Austauschverfahren gemäß Oberbegriff der unabhängigen Ansprüche sind aus der EP-A-246 470 bekannt.

Wird ein Maschinenteil ersetzt, muss die Grösse der Aussparung der Tischplatte den Dimensionen des neuen Maschinenteils angepasst werden.
Dies geschieht bei einer Vergrösserung der Aussparung durch Abstemmen von Beton und Abtrennen von Armierungseisen. Wenn die Aussparung verkleinert werden muss, werden durch Abstemmen von Beton die Armierungseisen freigelegt, neue Armierungseisen aufgebracht, geschalt und aufbetoniert.
Diese Betonarbeiten erzeugen viel Lärm und Staub und sind sehr zeitaufwendig, und damit durch die lange Stillstandperiode der Dampfturbogruppe sehr kostenintensiv.

Die Verkleinerung der Aussparung der Tischplatte ist dabei besonders zeitaufwendig, da das Freilegen und Aufbringen der Armierungseisen sehr sorgfältig zu geschehen hat, die Betonoberflächen sind sorgfältig zu behandeln und vorzubereiten, um eine stabile Verbindung zwischen der Tischplatte und dem neuaufgebrachten Beton zu erreichen.

### Darstellung der Erfindung

Der Erfindung liegt die Aufgabe zugrunde, bei einem Verfahren zum Austausch eines Maschinenteils einer Maschinenanlage der eingangs genannten Art zeitaufwendige und damit kostenintensive Betonarbeiten zu vermeiden, die bei einer Verkleinerung der Aussparung der Tischplatte entstehen.

Erfindungsgemäss wird dies dadurch erreicht, dass in einer Vorbereitungsphase
im Bereich der Maschinenanlage ein Metallrahmen errichtet wird, auf dem ein neues Maschinenteil mit Lagern versehen, fertig montiert, ausgerichtet und geprüft wird,
und dass in einer Austauschphase
das zu ersetzende Maschinenteil von den verbleibenden Maschinenteilen abgekuppelt und von der Tischplatte mit Hebemitteln entfernt wird,
dass Metallstützen im Bereich der Aussparung der Tischplatte eingebracht und mit der Sohlplatte oder dem Boden verbunden werden,
und dass das neue Maschinenteil mitsamt dem Metallrahmen mit Hebemitteln auf die Metallstützen abgesetzt und nach der endgültigen Ausrichtung mit den Metallstützen verbunden wird.

Die Vorteile der Erfindung sind unter anderem darin zu sehen, dass der Zeitaufwand zum Austauschen eines Maschinenteils deutlich reduziert wird, aufwendige Betonarbeiten entfallen. Der Maschinenteil kann bereits vor dem Abstellen der Dampfturbogruppe montiert und geprüft werden, was wie obiger Vorteil die Stillstandszeit der Dampfturbogruppe reduziert. Da der Metallrahmen separat abgestützt ist, kann sein dynamisches Verhalten durch die Metallstützenzahl und ihre Dimension positiv beeinflusst werden.

Es ist deshalb besonders zweckmässig, dass der Metallrahmen einstellbar mit der Tischplatte verbunden wird, damit das dynamische Verhalten der Einheit Maschinenteil-Metallrahmen nicht durch die Tischplatte beeinflusst wird.

### Kurze Beschreibung der Zeichnung

In der Zeichnung ist ein Ausführungsbeispiel der Erfindung anhand des Austausches eines Generators einer Dampfturbogruppe schematisch dargestellt.

Es zeigen:
- Fig. 1: die Seitenansicht einer Maschinenanlage mit Fundament im Längsschnitt;
- Fig. 2: eine perspektivische Ansicht eines Fundamentes bestehend aus Tisch und Einzelstützen;
- Fig. 3: einen Querschnitt gemäss Schnitt III-III der Fig.2 nach dem Austausch des Generators;
- Fig. 4: eine Draufsicht auf den eingebauten Rahmen ohne Generator;

Es sind nur die für das Verständnis der Erfindung wesentlichen Elemente gezeigt, anhand derer das neue Verfahren erläutert wird.

### Weg zur Ausführung der Erfindung

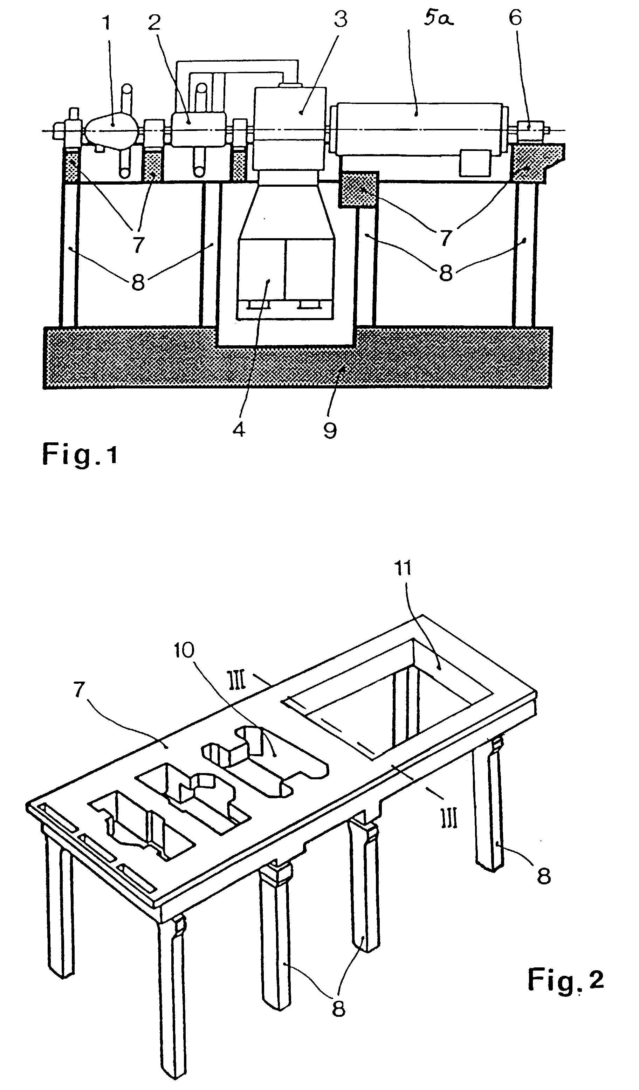

Die Maschinenanlage nach Fig.1 stellt eine Dampfturbogruppe dar, im wesentlichen bestehend aus einer Hochdruck-Teilturbine 1, einer Mitteldruck-Teilturbine 2 und einer Niederdruck-Teilturbine 3, die mit einem Kondensator 4 verbunden ist. Die Teilturbinen sind untereinander sowie mit einem Generator 5 und einem Erreger 6 gekuppelt. Die Turbogruppe steht auf einem Fundament, welches sich hier zusammensetzt aus einer Tischplatte 7, mehreren Einzelstützen 8 sowie einer Sohlplattte 9. Von der Tischplatte 7 sind lediglich die Querriegel ersichtlich, die Sohlplatte 9 liegt auf dem Erdboden auf.

Fig.2 zeigt ein unbestücktes Fundament für eine Turbogruppe mit einer Niederdruckteilturbine 3, für die die Aussparung 10 vorgesehen ist. Die Aussparung 11 nimmt den Generator auf. Es kann sich sowohl um ein monolithisches Betonfundament als auch um ein Federfundament mit Einzelstützen handeln.

Zur Erläuterung der Erfindung wird angenommen, dass der auf einem Fundament gemäss Fig.2 angeordnete Generator 5a innert kürzester Frist durch einen neuen Generator 5b eines geringeren Durchmessers zu ersetzen sei.

Nachstehend werden demnach das zu ersetzende Maschinenteil 5a und das neu anzukuppelnde Maschinenteil 5b Generatoren sein, während als verbleibende Maschinenteile die Gesamtheit der Teilturbinen 1-3 gilt.

Das Vorgehen unterscheidet nunmehr zwei zeitlich voneinander getrennte Perioden.

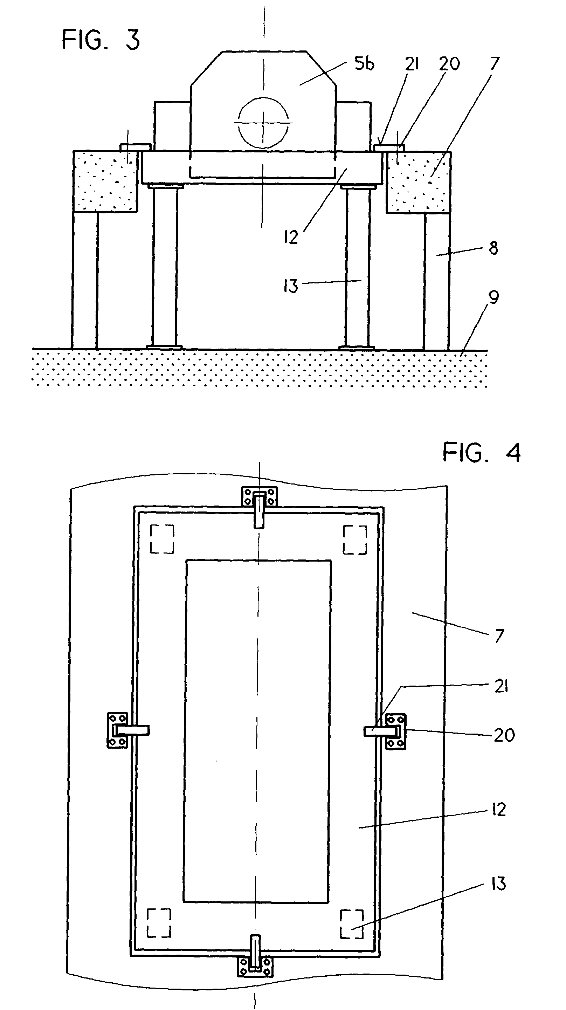

In der Vorbereitungsphase sind folgende Massnahmen zu treffen:
Unter der Annahme, dass in unmittelbarer Nachbarschaft der Maschinenanlage, im speziellen des Generators, eine ebene Fläche zur Verfügung steht, wird auf ihr ein Metallrahmen 12 aufgebaut.
Der Metallrahmen 12 ist gemäss Fig.3 und 4 so ausgelegt, dass seine Aussendimension kleiner ist als die Aussparung 11 der Tischplatte, und dass seine Innendimension grösser ist als der neue Generator 5b.
Auf dem Metallrahmen 12 wird der Generator 5b errichtet. Der Stator wird aufgebracht, die Lagerböcke werden montiert, der Rotor wird in den Stator eingefahren und in die Lager abgelegt. Der Generator wird für seine Endposition ausgerichtet und fest mit dem Metallrahmen 12 verbunden. Die Einheit neuer Generator 5b und Metallrahmen 12 wird nachstehend Austauscheinheit genannt. Die elektrische Prüfung erfolgt mit Hilfe eines nicht dargestellten elektrischen Motors.

Ueber den Generatoren wird, falls nicht schon vorhanden, eine Hubvorrichtung erstellt, die es ermöglicht, die Generatoren anzuheben und zu bewegen. Bei dieser Hubvorrichtung handelt es sich üblicherweise um eine bewegliche Krananlage, die in den Zeichnungen nicht dargestellt ist.

Die Austauschphase beginnt damit, dass bei abgestellter Turbogruppe der Generator 5a von der Turbine 3 abgekuppelt wird, von der Tischplatte 7 gelöst, mit der Hubvorrichtung entfernt und neben der Maschinenanlage abgestellt wird.

In die Aussparung der Tischplatte werden nun gemäss Fig.3 und 4 mindestens vier Metallstützen 13 eingebracht und auf der Sohlplatte 9 befestigt. Eine mögliche Befestigungsart wäre zum Beispiel eine Verschraubung mit anschliessender Untergiessung von Beton.

Nun wird die Austauscheinheit (5b,12) mit Hilfe der Hubvorrichtung über die Tischplatte 7 gehoben und auf die Metallstützen 13 abgesenkt. Die Justierung der Austauscheinheit (5b,12) in der Vertikalen erfolgt nun durch Unterlegen von nicht dargestellten Zwischenblechen unterschiedlicher Dicke, weshalb die Einheit eventuell mehrere Male angehoben und abgesenkt werden muss. Das Ausrichten in Längs- und Querrichtung wird mittels entsprechend angeordneten Schubvorrichtungen durchgeführt.

Nach der endgültigen Einstellung wird der Metallrahmen 12 mit den Metallstützen 13 fest verbunden, zum Beispiel durch eine Verschraubung.

Der Metallrahmen 12 ist zusätzlich gemäss Fig.3 und 4 einstellbar mit der Tischplatte 7 verbunden. Dazu wird beispielsweise auf der Tischplatte 7 eine Metallplatte mit einer rechteckigen Nut 20 und auf dem Metallrahmen ein ebenso geformter Metall-Keil 21 angebracht. In Fig.4 ist zur Veranschaulichung eine mögliche Lösung mit vier Keil-Nut-Systemen eingezeichnet.

Damit ist die Austauschphase abgeschlossen, der Generator 5b wird angekuppelt und die erforderlichen Anschlüsse vorgenommen.

Selbstverständlich ist die Erfindung nicht auf das gezeigte und beschriebene Verfahren beschränkt. Die Ausgestaltung des Metallrahmens und der Metallstützen kann auch, unter Berücksichtigung der geometrischen Erfordernisse, auf andere Weise erfolgen, dies im besonderen Hinblick auf das gewünschte dynamische Verhalten. Für die einstellbare Verbindung Metallrahmen-Tischplatte sind grundsätzlich beliebige andere Nut-Keil-Formen und -Anordnungen geeignet.

### Bezugszeichenliste

- 1: Hochdruckteilturbine
- 2: Mitteldruckteilturbine
- 3: Niederdruckteilturbine
- 4: Kondensator
- 5a: alter Generator
- 5b: neuer Generator
- 6: Erreger
- 7: Tischplatte
- 8: Einzelstütze
- 9: Sohlplatte
- 10: Aussparung für ND-Turbine
- 11: Aussparung für Generator
- 12: Metallrahmen
- 13: Metallstütze
- 20: Metallplatte mit rechteckiger Nut
- 21: rechteckförmiger Keil

## Patentansprüche

1. Verfahren zum Austausch eines Maschinenteils (5a) einer Maschinenanlage, deren massgebliche, miteinandergekuppelte Maschinenteile (1-6) auf einer gemeinsamen Tischplatte (7) angeordnet sind, welche über Einzelstützen (8) im Boden entweder unmittelbar oder über eine Sohlplatte (9) verankert ist, und welche zur Aufnahme der Maschinenteile Aussparungen (10,11) besitzt,
dadurch gekennzeichnet,
dass in einer Vorbereitungsphase
im Bereich der Maschinenanlage ein Metallrahmen (12) errichtet wird, auf dem ein neues Maschinenteil (5b) mit Lagern versehen, fertig montiert, ausgerichtet und geprüft wird,
und dass in einer Austauschphase
das zu ersetzende Maschinenteil (5a) von den verbleibenden Maschinenteilen (1-3) abgekuppelt und von der Tischplatte (7) mit Hebemitteln entfernt wird,
dass Metallstützen (13) im Bereich der Aussparung (11) der Tischplatte eingebracht und mit der Sohlplatte (9) oder dem Boden verbunden werden,
und dass das neue Maschinenteil (5b) mitsamt dem Metallrahmen (12) mit Hebemitteln auf die Metallstützen (13) abgesetzt und nach der endgültigen Ausrichtung mit den Metallstützen verbunden wird.

2. Verfahren nach Anspruch 1, dadurch gekennzeichnet, dass der Metallrahmen (12) einstellbar mit der Tischplatte (7) verbunden wird.

3. Verfahren nach Anspruch 2, dadurch gekennzeichnet, dass es sich bei der einstellbaren Verbindung um ein Keil-Nut-System handelt.

4. Verfahren nach Anspruch 1, dadurch gekennzeichnet, dass durch die Anzahl und Form der Metallstützen (13) das gewünschte dynamische Verhalten des neuen Maschinenteils erzielt wird.

5. Austauscheinheit (5b,12) zur Durchführung des Verfahrens nach Anspruch 1, gekennzeichnet durch ein auf einem Metallrahmen (12) befestigtes und fertig ausgerichtetes Maschinenteil (5b), welches mit seitlichem Spiel in einer Aussparung (11) einer Tischplatte (7) geführt ist und auf mehrerern, mit dem Boden oder der Sohlplatte (9) befestigten und in die Ausparung (11) hineinragenden Metallstützen (13) angeordnet ist.

## Claims

1. Method of exchanging a machine part (5a) of machine plant whose principal machine parts (1-6) coupled to one another are arranged on a common table plate (7) which is anchored via individual supports (8) in the ground either directly or via a sole plate (9) and which has recesses (10, 11) for accommodating the machine parts, charactertized in that, in a preparation phase, a metal frame (12) is set up in the area of the machine plant, on which metal frame (12) a new machine part (5b) is provided with bearings, is ready assembled, and is orientated and tested, and in that, in an exchange phase, the machine part (5a) to be replaced is uncoupled from the remaining machine parts (1-3) and is removed from the table plate (7) with lifting means, in that metal supports (13) are installed in the area of the recess (11) in the table plate and are connected to the sole plate (9) or the ground, and in that the new machine part (5b) together with the metal frame (12) is put down on the metal supports (13) with lifting means and after the final orientation is connected to the metal supports.

2. Method according to Claim 1, characterized in that the metal frame (12) is adjustably connected to the table plate (7).

3. Method according to Claim 2, characterized in that the adjustable connection is a wedge-groove system.

4. Method according to Claim 1, characterized in that the desired dynamic behaviour of the new machine part is achieved by the number and form of the metal supports (13).

5. Exchange unit (Sb, 12) for carrying out the method according to Claim 1, characterized by a ready orientated machine part (5b) which is fastened to a metal frame (12), is guided with lateral clearance in a recess (11) in the table plate (7), and is arranged on a plurality of metal supports (13) fastened to the ground or the sole plate (9) and projecting into the recess (11).

## Revendications

1. Procédé de remplacement d'un élément de machine (5a) d'une installation motrice, dont les éléments de 5 machine (1-6) principaux accouplés les uns aux autres sont disposés sur un plateau de table (7) commun, qui est ancré, par l'intermédiaire de supports individuels (8) dans le sol soit directement, soit par le biais d'une semelle (9), et qui possède des évidements (10, 11) pour recevoir les éléments de machine, caractérisé en ce que
dans une phase de préparation
dans la zone de l'installation motrice, on érige un cadre métallique (12), sur lequel est prémonté, orienté et testé un nouvel élément de machine (5b) pourvu de paliers,
et en ce que dans une phase de remplacement
l'élément de machine (5a) à remplacer est désaccouplé des éléments de machine restants (1-3) et est retiré du plateau de table (7) au moyen de leviers,
en ce que des supports métalliques (13) sont montés dans la zone de l'évidement (11) du plateau de table et sont reliés à la semelle (9) ou au sol,
et en ce que le nouvel élément de machine (5b) conjointement au cadre métallique (12) est déposé au moyen de leviers sur les supports métalliques (13) et est relié aux supports métalliques après l'orientation finale.

2. Procédé selon la revendication 1, caractérisé en ce que le cadre métallique (12) est relié de manière ajustable au plateau de table (7).

3. Procédé selon la revendication 2, caractérisé en ce que la liaison ajustable est un système de rainure et clavette.

4. Procédé selon la revendication 1, caractérisé en ce que l'on obtient le comportement dynamique souhaité du nouvel élément de machine grâce au nombre et à la forme des supports métalliques (13).

5. Unité de remplacement (5b, 12) pour réaliser le procédé selon la revendication 1, caractérisée par un élément de machine (5b) fixé sur un cadre métallique (12) et préorienté, qui est engagé avec un jeu latéral dans un évidement (11) d'un plateau de table (7) et est disposé sur plusieurs supports métalliques (13) faisant saillie dans l'évidement (11) et fixés au sol ou à la semelle (9).
